# DEMANDE DE BREVET EUROPEEN

(11) **EP 1 111 524 A1**
(43) Date de publication de la demande: **27.06.2001**
(21) Numéro de dépôt: 00204837.9
(22) Date de dépôt: 11.12.2000
(51) Int. Cl.: G06F 17/60

(54) **Dispositif de diffusion d'un taux d'occupation d'un site réel ou virtuel**

(30) Priorité: 22.12.1999 EP 99125682
(71) Demandeur: SWATCH AG, CH-2500 Biel (CH)
(72) Inventeur: Aurel, Aebi, 2520 La Neuveville (CH)
(74) Mandataire: Ravenel, Thierry Gérard Louis

(57) **Abrégé**

L'invention concerne un dispositif de diffusion d'au moins une information caractérisé en ce qu'il comprend des moyens de diffusion d'un signal perceptible simultanément par un large public et représentatif de ladite information, et en ce que ladite information est un taux d'occupation d'un site réel ou virtuel, notamment d'un site d'un réseau informatique notamment du type Internet

## Description

L'invention concerne généralement le domaine de l'affichage d'information.

Plus particulièrement, l'invention concerne un dispositif de diffusion d'au moins une information à l'aide d'un signal perceptible par un être humain et représentatif de celle-ci.

On constate qu'au cours des dernières années, le nombre de sites Internet, ainsi que de ses utilisateurs croît fortement. Pour les titulaires de sites notamment du réseau Internet, il est important de connaître la popularité de leurs sites pour mesurer l'impact qu'ils ont sur le public. Actuellement, cette information est généralement obtenue en comptabilisant le nombre de connexions à un site donné depuis sa création. Cette information est donc fournie sous la forme d'un chiffre généralement affiché sur la "home page" du site concerné. Cette information et son mode d'affichage sont limités et ne donnent pas entièrement satisfaction. En effet, on ressent chez les titulaires de sites le besoin de fournir une information relative à la fréquentation de leurs sites et de pouvoir foumir cette information de façon plus dynamique et plus vivante, ceci pour communiquer une image du site plus positive auprès du public.

En particulier, le mode d'affichage utilisé dans l'art antérieur présente l'inconvénient de n'afficher qu'une information dont l'évolution est monotone croissante et qui est non représentative de la fréquentation instantanée du site en question. Par ailleurs, l'information relative aux nombres de connexion depuis la création du site n'est affiché que sur la "home page" et n'est par conséquent destinée qu'à des individus isolés présents sur le site interrogé.

On connaît un brevet US 5,870,559 concernant un programme d'ordinateur destiné au suivi et à la maintenance de sites internet. En particulier, un "plug-in" prévu pour fonctionner avec ce programme permet de dénombrer les connexions effectuées à une adresse particulière, correspondant à une page particulière d'un site Internet par exemple, pendant un intervalle de temps prédéfini par l'utilisateur. Toutefois, le résultat ainsi obtenu est alors affiché, simplement sous forme d'un nombre, sur une page du programme principal présentant le plan du site Internet concerné et limite la diffusion de cette information à un public très restreint, à savoir un administrateur réseau ou de sites Internet.

L'invention a donc pour but de remédier aux inconvénients de l'art antérieur susmentionné en fournissant un dispositif de diffusion d'au moins une information représentative de la fréquentation instantanée ou quasi-instantanée d'un ou plusieurs sites réels ou virtuels, notamment d'un site d'un réseau informatique du type Internet, simultanément à un large public.

A cet effet, l'invention a pour objet de réaliser un dispositif de diffusion d'au moins une information caractérisé notamment en ce qu'il comprend des moyens de diffusion d'un signal visuel et/ou sonore représentatif de ladite information, en ce que ladite information est un taux d'occupation d'un site réel ou virtuel, notamment d'un site d'un réseau informatique, notamment du type Internet, et en ce que ledit signal varie en fréquence et/ou en intensité en fonction dudit taux d'occupation.

Grâce à ces caractéristiques, une information dynamique représentative du taux d'occupation peut être fournie simultanément à un large public, comme, par exemple, dans un intemet-café.

Selon un mode de réalisation particulier, le dispositif de diffusion d'au moins une information est caractérisé en ce qu'il comprend des moyens d'émission d'un signal sonore représentatif de ladite information et en ce que ladite information est un taux d'occupation d'un site réel ou virtuel, notamment d'un site d'un réseau informatique, notamment du type internet.

Ainsi, la communication du taux d'occupation est fournie de manière visible et/ou facilement perceptible par un utilisateur ou par un public présent dans un espace donné. L'oeil et/ou l'oreille reçoivent une impression dynamique et vivante du taux d'occupation d'un ou plusieurs sites déterminés.

Dans une variante préférée, le signal est un signal lumineux diffusé par les moyens d'affichage de façon tridimensionnelle de telle manière que l'information relative au taux d'occupation rayonne et remplit un espace donné, notamment une salle à l'intérieur d'un bâtiment destiné soit au public, soit à un groupe de personnes déterminées, notamment, le personnel d'une entreprise ou les membres d'un club.

Selon une variante particulière de réalisation du dispositif de diffusion, ce dernier comporte une structure translucide dans laquelle sont agencés des moyens de production d'un signal lumineux.

Afin de permettre un rayonnement optimal du signal lumineux dans l'espace dans lequel se trouve le dispositif d'affichage, il est proposé dans une variante de suspendre la structure translucide au-dessus du sol.

D'autres variantes et modes de réalisation, ainsi que des avantages particuliers de la présente invention, seront décrits ci-après à l'aide de la description donnée à titre d'exemple et faite en référence au dessin ci-annexé, dans lequel :
- la figure 1 est une vue en perspective d'un espace ou lien de rencontre incorporant un premier mode de réalisation du dispositif de diffusion d'au moins une information selon l'invention;
- la figure 2 montre le dispositif de diffusion de la figure 1 avec son dispositif de commande; et
- la figure 3 montre un deuxième mode de réalisation du dispositif de diffusion d'au moins une information selon l'invention.

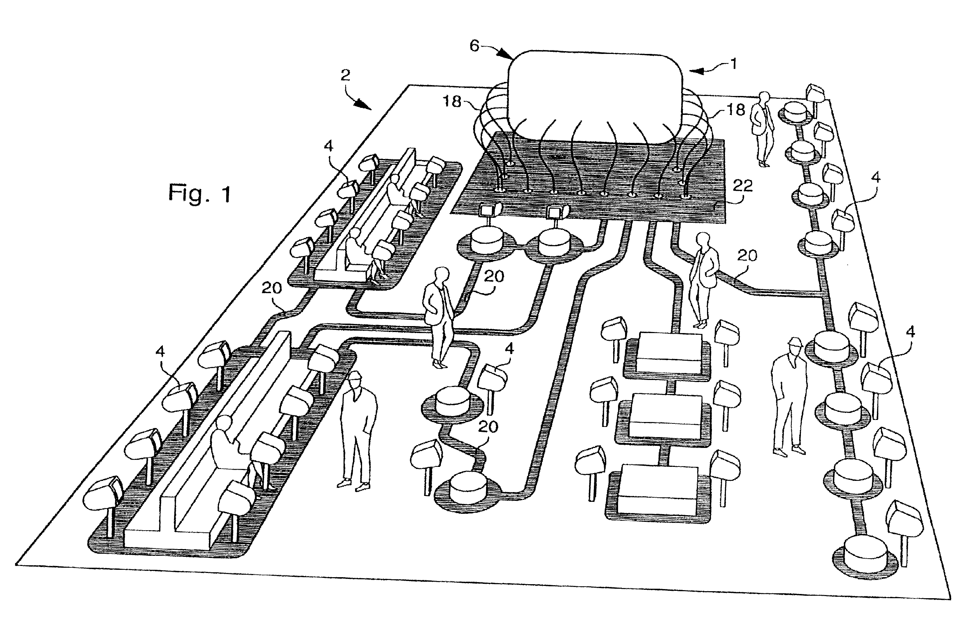

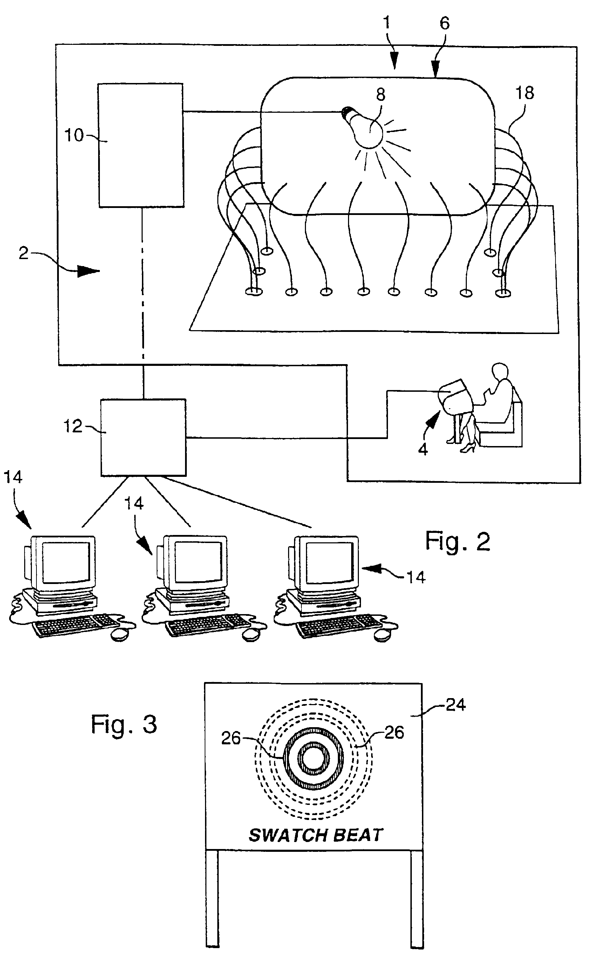

En se référant aux figures 1 et 2, on décrira ci-après un premier mode de réalisation du dispositif de diffusion selon l'invention qui comprend un dispositif d'affichage tridimensionnel désigné par la référence générale 1. Dans l'exemple décrit, le dispositif d'affichage 1 est agencé dans un lieu de rencontre 2 tel qu'un cybercafé ou "café Internet" et permet d'afficher au moins une information perceptible, de préférence, par l'ensemble des individus se trouvant dans le lieu de rencontre 2.

De manière non limitative, le lieu 2 comprend en outre une pluralité de postes ou stations 4 de consultation ou d'interrogation du réseau internet.

Dans cet exemple, l'information se présente sous la forme d'un signal lumineux qui rayonne dans toutes les directions ou en d'autres termes de façon tridimensionnelle.

Selon l'invention, l'information est un taux d'occupation d'un site d'un réseau informatique tel qu'un site internet. Par taux d'occupation on entend le nombre instantané de connexions à ce site ou encore le nombre de connexions à ce site sur une période déterminée notamment une période glissante. Dans ce dernier cas, la période glissante peut être définie par les cinq dernières minutes de sorte que l'information affichée par le dispositif représente en permanence le nombre de connexions sur ces cinq demières minutes.

Le dispositif 1 permet ainsi de présenter l'évolution de la fréquentation d'un site Internet de manière dynamique, ce qui rend cette information particulièrement vivante et attractive.

Dans ce premier mode de réalisation, le dispositif d'affichage 1 comporte une structure translucide 6 dans laquelle sont agencées une ou plusieurs sources lumineuses, représentées à la figure 2 par une ampoule 8, qui forment les moyens de production de signaux lumineux. La structure 6 est par exemple formée par une coque réalisée en un matériau transparent ou translucide tel que du polyméthylméthacrylate (PMMA). Les sources lumineuses 8 peuvent être formées par tout moyen connu de l'homme de métier telles des lampes à incandescence ou des diodes lumineuses. Les sources lumineuses 8 sont reliées à des moyens de commande 10 qui sont à leur tour reliés à un centre serveur 12 sur lequel peuvent se connecter les stations 4 ainsi que des ordinateurs 14 situés en dehors du lieu de rencontre 2.

Dans ce mode de réalisation, la fréquence du signal lumineux varie en fonction du taux d'occupation. Selon une variante de réalisation, on peut faire varier l'intensité du signal lumineux pour représenter le taux d'occupation. Le centre serveur 12 comprend des moyens de calcul du nombre de connexions instantanées ou sur un intervalle de temps constant (période glissante) à un site donné et des moyens de fourniture d'un signal représentatif de ce nombre de connexion qui est transmis aux moyens de commande 10. Ces moyens de commande sont agencés pour commander l'alimentation des moyens de production de signaux lumineux, en particulier pour faire varier la fréquence ou l'intensité du signal lumineux en fonction de la variante de réalisation choisie.

Dans l'exemple représenté la structure translucide 6 est suspendue au-dessus du sol au moyen d'une pluralité d'éléments ou pieds de support rigides ou semi-rigides répartis à sa périphérie. De préférence, la structure 6 est suspendue à une hauteur telle qu'elle permet la circulation de personnes en-dessous d'elle-même. L'ensemble structure translucide/pieds de support présente la forme générale d'un circuit intégré avec ses fils de connexion. Selon une variante de réalisation, les pieds de support 18 forment des guides d'onde lumineux qui rayonnent.

En outre, le sol du lieu de rencontre 2 évoque un circuit imprimé avec ses pistes de connexion 20 qui relient matériellement les divers postes 4 à une surface 22 symbolisant une plage de connexion avec l'ensemble structure translucide/pieds de support.

A la figure 3 est représenté un deuxième mode de réalisation du dispositif de diffusion selon l'invention qui se présente sous la forme d'un tableau d'affichage 24. Ce tableau 24 comprend une pluralité de sources lumineuses discrètes 26 qui peuvent être activées sélectivement par les moyens de commande (non représentés) de manière à ce que la zone éclairée s'étende sur une surface variable représentative du taux d'occupation d'un site Internet déterminé.

Bien entendu, le dispositif de diffusion selon l'invention n'est pas limité aux modes de réalisation décrits ci-dessus. En effet on peut prévoir par exemple de remplacer le signal visuel par un signal sonore ou de combiner ces deux signaux.

## Revendications

1. Dispositif d'affichage d'au moins une information caractérisé en ce qu'il comprend des moyens d'affichage d'un signal perceptible par un être humain et représentatif de ladite information, et en ce que ladite information est un taux d'occupation d'un site réel ou virtuel, notamment d'un site d'un réseau informatique notamment du type internet.

2. Dispositif d'affichage selon la revendication 1, caractérisé en ce que ledit signal est un signal visuel et/ou sonore.

3. Dispositif d'affichage selon la revendication 2, caractérisé en ce que ledit signal varie en intensité en fonction dudit taux d'occupation.

4. Dispositif d'affichage selon la revendication 2, caractérisé en ce que ledit signal varie en fréquence en fonction dudit taux d'occupation.

5. Dispositif d'affichage selon l'une des revendications 2 à 4, caractérisé en ce que les moyens d'affichage comprennent un support formé. d'une pluralité de sources lumineuses discrètes et en ce que le nombre de sources activées varie en fonction du taux d'occupation.

6. Dispositif d'affichage selon l'une quelconque des revendications précédentes, caractérisé en ce que ledit signal est un signal lumineux.

7. Dispositif d'affichage selon la revendication 6, caractérisé en ce que ledit moyen d'affichage rayonne ledit signal lumineux de façon tridimensionnelle.

8. Dispositif d'affichage selon l'une quelconque des revendications précédentes, caractérisé en ce qu'il comporte une structure translucide dans laquelle sont agencés au moins des moyens de production d'un signal lumineux.

9. Dispositif d'affichage selon la revendication 8, caractérisé en ce que ladite structure est suspendue au-dessus du sol.

10. Dispositif d'affichage selon la revendication 9, caractérisé en ce que ladite structure est portée au-dessus du sol par une pluralité d'éléments supports rigides ou semi-rigides.

11. Dispositif d'affichage selon la revendication 10, caractérisé en ce que ladite structure translucide-éléments support présente la forme générale d'un circuit intégré avec ses fils de connexion.

12. Dispositif d'affichage selon la revendication 10 ou 11, caractérisé en ce que lesdits éléments de support sont agencés pour former des guides d'onde lumineuse rayonnants.

13. Dispositif d'affichage selon l'une quelconque des revendications précédentes, caractérisé en ce qu'il est disposé au-dessus du sol à une hauteur telle qu'il permet la circulation de personnes en-dessous de lui-même.
